# EUROPEAN PATENT APPLICATION

(11) **EP 4 446 158 A1**
(43) Date of publication of application: **16.10.2024**
(21) Application number: 22911801.3
(22) Date of filing: 19.12.2022
(51) Int. Cl.: B60L 15/20, B60L 50/60, B60L 50/10, B60L 58/12, B60L 58/24, E02F 9/20, H02P 5/74, H02K 7/116

(54) **ELECTRIC CONSTRUCTION MACHINERY**

(30) Priority: 21.12.2021 KR 20210184342
(71) Applicant: HD Hyundai Infracore Co., Ltd., Incheon 22502 (KR)
(72) Inventor: SEO, Hyunjae, Ansan-si Gyeonggi-do 15484 (KR); PARK, Jinhyun, Suwon-si, Gyeonggi-do 16295 (KR)
(74) Representative: Isarpatent
(86) International application number: PCT/KR2022/020690
(87) International publication number: WO 2023/121168

(57) **Abstract**

Electric construction machinery according to embodiments of the present disclosure includes a battery unit, a power distribution unit, a plurality of inverter units, a plurality of motors, and a vehicle control unit. The power distribution unit is electrically connected to the battery unit. The plurality of inverter units are electrically connected to the power distribution unit. The plurality of motors are electrically connected to the plurality of inverter units, respectively. In addition, the vehicle control unit is electrically connected to each of the plurality of inverter units and transmits, to the inverter units, a control signal corresponding to an electrical signal received from an operation unit. Moreover, the vehicle control unit detects usable power of the battery unit, and uses the control signal so as to control power supplied to the motors by the inverter units, and thus controls power required by the motors to be less than or equal to the usable power of the battery unit.

## Description

### [TECHNICAL FIELD]

The present disclosure relates to electric construction machinery, and more specifically, to electric construction machinery capable of controlling power required by motors of the construction machinery to be less than or equal to usable power of the battery.

### [BACKGROUND ART]

The number of construction machinery driven by electricity is increasing. The construction machinery driven by electricity is supplied with electricity through a battery or hybrid method. Hereinafter, the construction machinery driven by electricity is referred to as electric construction machinery.

### ] (Related Art Document)

### (Patent Document)

Korean Patent Application Publication No. 10-2019-0071888 (published on June 25, 2019)

### [DETAILED DESCRIPTION OF INVENTION]

### [TECHNICAL PROBLEMS]

The present disclosure has been devised to obviate the above limitation. An aspect of the present disclosure is directed to providing electric construction machinery capable of limiting usable output of a motor so that the motor of the construction machinery is able to use limited power to produce output appropriate for the situation of construction work.

In addition, another aspect of the present disclosure is directed to providing electric construction machinery capable of effectively controlling or distributing the power to be distributed to each of several motors according to the temperature of a battery, which is because the output power of the battery varies depending on the temperature of the battery according to the type of battery cell.

However, the aspects of the present disclosure are not limited to the aspects described above and may be diversely expanded without departing from the spirit and scope of the present disclosure.

### [TECHNICAL SOLUTION]

Electric construction machinery according to embodiments of the present disclosure includes a battery unit, a power distribution unit, a plurality of inverter units, a plurality of motors, and a vehicle control unit. The power distribution unit is electrically connected to the battery unit. The plurality of inverter units are electrically connected to the power distribution unit. The plurality of motors are electrically connected to the plurality of inverter units, respectively. In addition, the vehicle control unit is electrically connected to each of the plurality of inverter units and transmits, to the inverter units, a control signal corresponding to an electrical signal received from an operation unit. Moreover, the vehicle control unit detects usable power of the battery unit, and uses the control signal so as to control power supplied to the motors by the inverter units, and thus controls power required by the motors to be less than or equal to the usable power of the battery unit.

According to an embodiment, the inverter unit includes a motor control unit, and a control signal from the vehicle control unit is input to the motor control unit.

According to an embodiment, the vehicle control unit controls the power supplied to the motors, and thus controls the power required by the motors to be less than or equal to the usable or outputable power according to a temperature of the battery unit.

According to an embodiment, the electric construction machinery according to embodiments of the present disclosure further includes a generator and an engine. The generator is electrically connected to the power distribution unit. The engine is connected to the generator and drives the generator. When the battery unit is discharged, power produced by the generator is supplied to the battery unit through the power distribution unit. Alternatively, the power produced by the generator is supplied to the inverter unit through the power distribution unit.

According to an embodiment, the vehicle control unit detects the usable or outputable power (C-rate) according to the temperature of the battery unit, chargeable power according to a state of charge (SOC) and temperature of the battery unit, and required power of the motor according to a load of the construction machinery, and controls the total power required by the motors to be less than or equal to the usable or outputable power according to the temperature of the battery unit.

According to an embodiment, the vehicle control unit may adjust a power generation amount of the generator depending on a charging limit according to the temperature of the battery unit.

According to an embodiment, there is further included a mode selection unit that changes settings of the construction machinery, and the inverter unit controls the power supplied to the motor according to selection of the mode selection unit.

According to an embodiment, the vehicle control unit limits or delimits an output of the motor according to a temperature of the battery unit.

According to an embodiment, the plurality of inverter units includes a first inverter unit, a second inverter unit, and a third inverter unit. The plurality of motors include a first motor electrically connected to the first inverter unit, a second motor electrically connected to the second inverter unit, and a third motor electrically connected to the third inverter unit. The first motor is connected to a hydraulic pump, the second motor is connected to a swing reduction gear, and the third motor is connected to a traveling device.

According to an embodiment, when a work mode is selected, the vehicle control unit sets priorities to drive the first motor, the second motor, and the third motor in that order. In addition, the vehicle control unit limits the output of the first motor, the second motor, and the third motor according to the temperature of the battery unit depending on the set priorities when the first motor, the second motor, and the third motor are all used.

According to an embodiment, the vehicle control unit controls all of the first motor, second motor, and third motor to use 100% of power when the temperature of the battery unit is 10 to 25 degrees, controls the first motor and the second motor to use 100% of power and the third motor to use 80% of power when the temperature of the battery unit is 25 to 25 degrees, and controls all of the first motor, the second motor, and the third motor to use 50% of power when the temperature of the battery unit is -20 to 10 degrees.

### [EFFECT OF INVENTION]

Electric construction machinery according to embodiments of the present disclosure is capable of limiting usable output of a motor so that the motor of the construction machinery is able to use limited power to produce output appropriate for the situation of construction work.

In addition, the electric construction machinery is capable of effectively controlling or distributing the power to be distributed to each of several motors according to the temperature of a battery unit, useable power and/or chargeable power of the battery unit.

However, the benefits of the present disclosure are not limited to the benefits described above and may be diversely expanded without departing from the spirit and scope of the present disclosure.

### [BRIEF DESCRIPTION OF THE DRAWING]

FIG. 1 is a diagram illustrating electric construction machinery according to a first embodiment of the present disclosure.
FIG. 2 is a diagram illustrating the usable power and chargeable power of the electric construction machinery according to the temperature of a battery unit according to the first embodiment of the present disclosure.
FIG. 3 is a diagram illustrating electric construction machinery according to a second embodiment of the present disclosure.
FIG. 4 is a diagram illustrating the usable power, chargeable power, and power generation amount of a generator of the electric construction machinery according to the temperature of a battery unit according to the second embodiment of the present disclosure.
FIG. 5 is a diagram illustrating an example where the electric construction machinery in FIG. 4 is an excavator.
FIG. 6 is a diagram illustrating electric construction machinery according to a third embodiment of the present disclosure.
FIG. 7 is a diagram illustrating electric construction machinery according to a fourth embodiment of the present disclosure.
FIG. 8 is a diagram illustrating an example where the electric construction machinery in FIG. 4 is a wheel loader.

### [BEST MODE FOR CARRYING OUT THE INVENTION]

Embodiments of the present disclosure will be described in detail with reference to the accompanying drawings. In the components of the present disclosure, detailed descriptions of what can be clearly understood and easily carried into practice through related art by those skilled in the art will be omitted to avoid making the gist of the present disclosure unclear.

In the drawings, a thickness or a size of each component is exaggerated, omitted, or schematically illustrated for convenience and clarity of the explanation. The size and area of each component do not entirely reflect the actual size or area.

Hereinafter, electric construction machinery according to embodiments of the present disclosure will be described.

Currently, the number of construction machinery driven by electricity is increasing. The construction machinery driven by electricity is supplied with electricity through a battery or hybrid method. Hereinafter, the construction machinery driven by electricity is referred to as electric construction machinery.

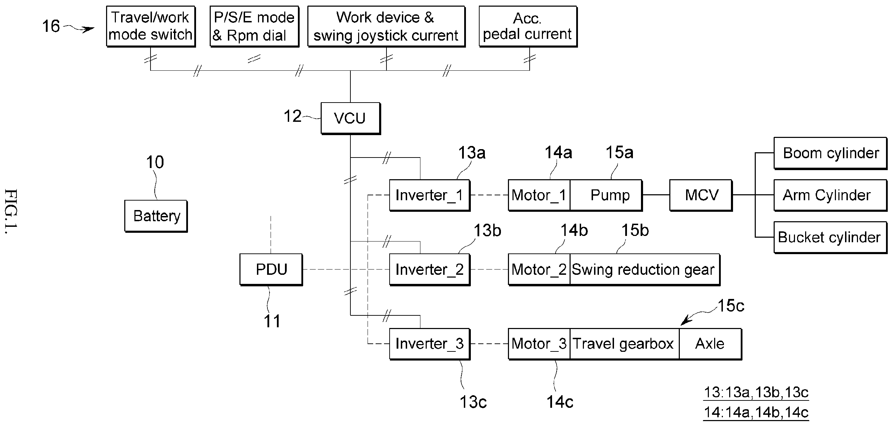

FIG. 1 is a diagram illustrating electric construction machinery according to a first embodiment of the present disclosure. Herein, the electric construction machinery is illustratively shown as an excavator.

Referring to FIG. 1, the electric construction machinery according to the first embodiment of the present disclosure includes a battery unit 10, a vehicle control unit (VCU) 12, and a power distribution unit (PDU) 11, an inverter unit 13, and a motor 14.

The electric construction machinery according to the first embodiment of the present disclosure does not have an engine. Herein, the engine refers to an internal combustion engine that obtains power by burning fuel in an internal cylinder or combustion chamber.

The electric construction machinery according to the first embodiment of the present disclosure performs construction work using the motor 14. The motor 14 is driven by receiving power stored in the battery unit 10.

The battery unit 10 is a device (component) that stores electricity and refers to a commonly used storage battery or battery.

The battery unit 10 converts electrical energy into chemical energy and stores the same. When necessary, the battery unit 10 converts the chemical energy into electrical energy to supply power to an external circuit. When discharging, the battery unit 10 may receive external power and store electricity by converting electrical energy into chemical energy.

The battery unit 10 is disposed within the construction machinery and electrically connected to the power distribution unit 11, and the electricity stored in the battery unit 10 is supplied to the power distribution unit 11 when necessary.

The outputable power of the battery unit 10 may vary depending on the temperature of the battery unit 10 depending on the type of battery cell, which is the basic unit of the battery unit 10.

The power distribution unit (PDU) 11 is disposed within the construction machinery, is disposed between the battery unit 10 and the inverter unit 13, and is electrically connected to the battery unit 10 and the inverter unit 13.

The power distribution unit 11 is a component that distributes the power supplied from the battery unit 10 to an external circuit (specifically, the inverter unit 13), and refers to a commonly used power distribution device, junction box, or fuse box.

The inverter unit 13 is disposed within the construction machinery, is disposed between the power distribution unit 11 and the motor 14, and is electrically connected to the power distribution unit 11 and the motor 14. Additionally, the inverter unit 13 is electrically connected to the vehicle control unit 12 described below.

The inverter unit 13 is a component that converts the direct current (DC) power supplied through the power distribution unit 11 into alternating current (AC) power and supplies the AC power to the motor 14, or converts the AC power regenerated from the motor 14 into DC power.

Additionally, the inverter unit 13 includes a motor control unit (not shown) that may control the motor 14.

The inverter unit 13 may use the motor control unit to determine the status of the motor 14 of the construction machinery, such as its speed and temperature, and control the speed and torque of the motor 14.

The inverter unit 13 may receive control signals from the vehicle control unit 12.

The control signal from the vehicle control unit 12 is input to the motor control unit of the inverter unit 13. In addition, the inverter unit 13 may control the motor 14 using the motor control unit so that the motor 14 may be driven according to the input control signal (according to the input control signal).

A plurality of inverter units 13 may be disposed. Specifically, the inverter unit 13 may have a number corresponding to the number of motors 14. In other words, when there are three motors 14 mounted on the construction machinery, there may also be three inverter units 13. The inverter unit 13 may have three inverter units 13 connected to each of the motors 14.

In the case where there is the plurality of inverter units 13, each of the inverter units 13 is electrically connected to the power distribution unit 11 and the vehicle control unit 12, and is electrically connected to each of the motors 14.

Referring again to FIG. 1, the plurality of inverter units 13 include a first inverter unit 13a, a second inverter unit 13b, and a third inverter unit 13c.

Each of the first inverter unit 13a, the second inverter unit 13b, and the third inverter unit 13c is electrically connected to the power distribution unit 11 and the vehicle control unit 12.

The vehicle control unit 12 is disposed within the construction machinery and is electrically connected to various operation units installed in the driver's seat and the plurality of inverter units 13.

A mode selection unit 16 is installed in the driver's seat, so that the type of work performed by the construction machinery or the state mode to be applied to its operation when performing the selected work may be selected. The mode selection unit 16 installed in the driver's seat represents various types of operation buttons, operation levers, and operation switches. Specifically, the mode selection unit 16 installed in the driver's seat, for example, as illustrated in FIG. 1, may represent a driving/work mode switch, power/standard/eco mode (P/S/E mode) and rpm dial, work device and swing joystick, and accelerator pedal.

The vehicle control unit 12 may receive electrical signals from the operation unit.

The vehicle control unit 12 may transmit a control signal to the inverter unit 13 so that the construction machinery works according to the electrical signal received from the operation unit.

The vehicle control unit 12 transmits a control signal corresponding to an electrical signal received from the operation unit to the inverter unit 13.

In the case where there is the plurality of inverter units 13, the vehicle control unit 12 is electrically connected to each of the inverter units 13, and each of the inverter units 13 is electrically connected to each of the motors 14.

Referring again to FIG. 1, the vehicle control unit 12 is electrically connected to each of the first inverter unit 13a, the second inverter unit 13b, and the third inverter unit 13c.

The vehicle control unit 12 may transmit each control signal corresponding to an electrical signal received from various operation units to the first inverter unit 13a, the second inverter unit 13b, and the third inverter unit 13c.

The vehicle control unit 12 may control the inverter unit 13.

The vehicle control unit 12 may control the power supplied by the inverter unit 13 to the motor 14. Specifically, the vehicle control unit 12 may control (adjust) the power supplied by the inverter unit 13 to the motor 14 using a control signal transmitted to the inverter unit 13.

The inverter unit 13 may adjust the power input through the power distribution unit 11 by a control signal from the vehicle control unit 12 and supply the same to the motor 14.

A plurality of motors 14 are disposed within the construction machinery.

The motor 14 is a type of motor and may be a three-phase AC motor 14.

Referring again to FIG. 1, the plurality of motors 14 include a first motor 14a, a second motor 14b, and a third motor 14c.

The first motor 14a is electrically connected to the first inverter unit 13a, the second motor 14b is electrically connected to the second inverter unit 13b, and the third motor 14c is electrically connected to the third inverter unit 13c.

When the construction machinery is an excavator, for example, the first motor 14a may be connected to a hydraulic pump 15a, the second motor 14b may be connected to a swing reduction gear 15b, and the third motor 14c may be connected to a traveling device 15c. The traveling device 15c may include a traveling gear and an axle. Specifically, the traveling gear is connected to the axle, a device that transmits power to wheels.

The hydraulic pump is connected to the main control valve (MCV), which is connected to a boom cylinder, arm cylinder, and bucket cylinder.

The first motor 14a drives the hydraulic pump, and by driving the hydraulic pump, the working fluid may move to the boom cylinder, arm cylinder, and bucket cylinder through the MCV. The boom, arm, and bucket are operated by the first motor 14a and the hydraulic pump.

An excavator is largely configured of a traveling body and a swing body disposed on the traveling body. The second motor 14b may swing the swing body of the excavator.

The third motor 14c may be connected to the traveling gear to drive the excavator.

The vehicle control unit 12 controls (adjusts) the power supplied by the inverter unit 13 to the motor 14 using the control signal transmitted to the inverter unit 13, so that the power required by the motor 14 is controlled to be less than or equal to the usable power of the battery unit 10.

The power supplied to the first motor 14a, the second motor 14b, and the third motor 14c may be controlled (adjusted) by a control signal from the vehicle control unit 12. The vehicle control unit 12 controls the power supplied to the first motor 14a, the second motor 14b, and the third motor 14c, so that the power required by the first motor 14a, the second motor 14b, and the third motor 14c may be less than or equal to the usable power of the battery unit 10.

In addition, the outputable power of the battery unit 10 may vary depending on the temperature of the battery unit 10 depending on the type of battery cell, which is the basic unit of the battery unit 10. Hence, the vehicle control unit 12 controls the power supplied to the motor 14, so that the power required by the motor 14 may be controlled to be less than or equal to the usable (or outputable) power according to the temperature of the battery unit 10. Specifically, the vehicle control unit 12 controls the power supplied to the first motor 14a, the second motor 14b, and the third motor 14c, so that the power required by the first motor 14a, the second motor 14b, and the third motor 14c may be less than or equal to the usable (or outputable) power according to the temperature of the battery unit 10.

The construction machinery driven by electric power rather than an engine includes the plurality of motors 14. The vehicle control unit 12 controls the power supplied to the plurality of motors 14, so that the power required by each of the motors 14 may be controlled to be less than or equal to the usable (or outputable) power according to the temperature of the battery unit 10.

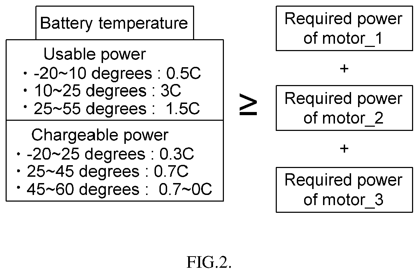

FIG. 2 is a diagram illustrating the usable power and chargeable power of the electric construction machinery according to the temperature of the battery unit according to the first embodiment of the present disclosure.

In FIGS. 1 and 2, when the temperature of the battery unit 10 is -20 to 10 degrees, the usable power of the battery unit 10 may be 0.5 C (C-Rate). When the temperature of the battery unit 10 is 10 to 25 degrees, the usable power of the battery unit 10 may be 3 C. When the temperature of the battery unit 10 is 25 to 55 degrees, the usable power of the battery unit 10 may be 1.5 C. In addition, when the temperature of the battery unit 10 is -20 to 25 degrees, the chargeable power of the battery unit 10 may be 0.3 C. When the temperature of the battery unit 10 is 25 to 45 degrees, the chargeable power of the battery unit 10 may be 0.7 C. When the temperature of the battery unit 10 is 45 to 60 degrees, the chargeable power of the battery unit 10 may linearly decrease to 0.7 C to 0 C.

The vehicle control unit 12 may detect the usable (or outputable) power (C-rate) according to the temperature of the battery unit 10 and the required power of the motor 14 according to the load of the construction machinery. Additionally, the vehicle control unit 12 may control the total power required by the motor 14 to be less than or equal to the usable (or outputable) power depending on the temperature of the battery unit 10.

Specifically, the vehicle control unit 12 controls the power supplied to the first motor 14a, the second motor 14b, and the third motor 14c, so that the total power required by the first motor 14a, the second motor 14b, and the third motor 14c may be controlled to be less than or equal to the usable (or outputable) power depending on the temperature of the battery unit 10.

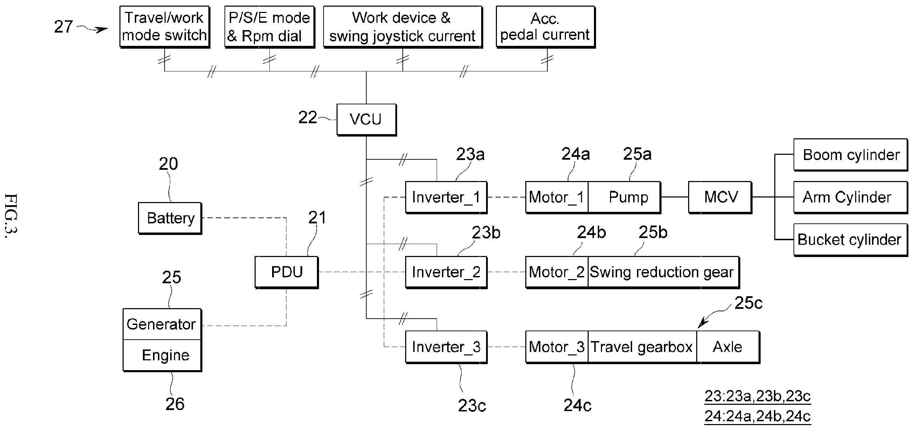

FIG. 3 is a diagram illustrating electric construction machinery according to a second embodiment of the present disclosure. Herein, the electric construction machinery is illustratively shown as an excavator.

Referring to FIG. 3, the electric construction machinery according to the second embodiment of the present disclosure includes a battery unit 20, a vehicle control unit 22, a power distribution unit 21, an inverter unit 23, a motor 24, a generator 25, and an engine 26.

In comparison with the electric construction machinery according to the first embodiment of the present disclosure described above, the electric construction machinery according to the second embodiment of the present disclosure differs in that the generator 25 and the engine 26 are added. Accordingly, the battery unit 20, the vehicle control unit 22, the power distribution unit 21, the inverter unit 23, and the motor 24 of the electric construction machinery according to the second embodiment of the present disclosure are the same as the battery unit 10, the vehicle control unit 12, the power distribution unit 11, the inverter unit 13, and the motor 14 of the electric construction machinery according to the first embodiment of the present disclosure. Accordingly, the detailed descriptions of the same components will be replaced with the above descriptions.

The engine 26 of the electric construction machinery according to the second embodiment of the present disclosure is disposed within the construction machinery and represents an engine that obtains power by burning fuel in an internal cylinder or combustion chamber.

The engine 26 is connected to the generator 25 and drives the generator 25.

The generator 25 is a power generation device that is disposed within the construction machinery, driven by the engine 26, and supplies power to various electrical devices including the motor 24.

The generator 25 is electrically connected to the power distribution unit 21.

When the battery unit 20 is discharged, power produced by the generator 25 may be supplied to the battery unit 20 through the power distribution unit 21. Additionally, the power produced by the generator 25 may be supplied to the inverter unit 23 through the power distribution unit 21.

When discharging, the battery unit 20 may receive power from the generator 25 and convert electrical energy into chemical energy to store electricity.

The battery unit 20 may be electrically connected to the power distribution unit 21, and electricity stored in the battery unit 20 may be supplied to the inverter unit 23 through the power distribution unit 21 when necessary.

The power distribution unit 21 is disposed between the battery unit 20 and the inverter unit 23, and is electrically connected to the battery unit 20 and the inverter unit 23. Additionally, the power distribution unit 21 is electrically connected to the generator 25.

The power distribution unit 21 may distribute power supplied from the battery unit 20 or the generator 25 to an external circuit (specifically, the inverter unit 23). Additionally, the power distribution unit 21 may supply power supplied from the generator 25 to the battery unit 20.

Additionally, the electric construction machinery according to the second embodiment of the present disclosure may include a mode selection unit 27.

The mode selection unit 27 is installed in the driver's seat, so that the type of work performed by the construction machinery or the state mode to be applied to its operation when performing the selected work may be selected. The mode selection unit 27 installed in the driver's seat represents various types of operation buttons, operation levers, and operation switches. Specifically, the mode selection unit 27 installed in the driver's seat, as illustrated in FIG. 3, may represent a driving/work mode switch, a power/standard/eco mode (P/S/E mode) and an rpm dial, a work device and a swing joystick, and an accelerator pedal.

In other words, the mode selection unit 27 may be the same as the mode selection unit 16 of the electric construction machinery according to the first embodiment of the present disclosure described above.

In addition, the electric construction machinery according to the second embodiment of the present disclosure may further include a hydraulic pump 25a, a swing reduction gear 25b, and a traveling device 25c.

The electric construction machinery according to the second embodiment of the present disclosure may be formed in the same manner as the pump 15a, the swing reduction gear 15b, and the traveling device 15c of the electric construction machinery according to the first embodiment of the present disclosure described above.

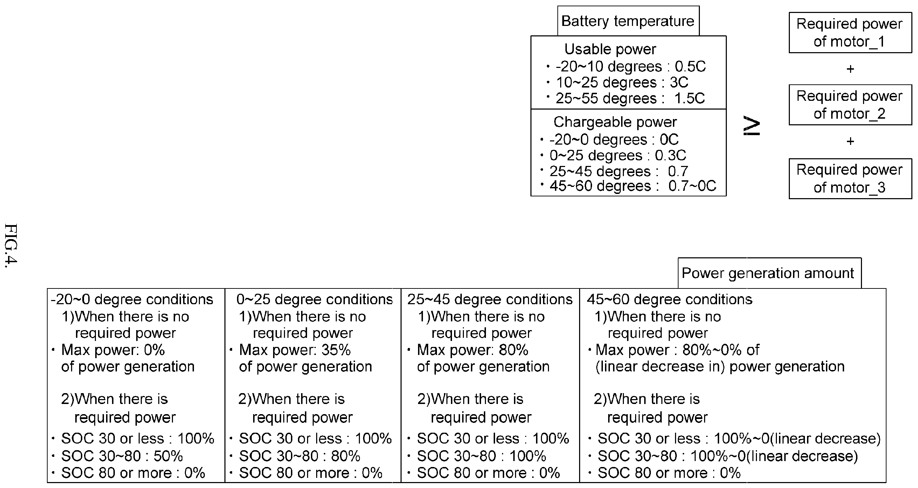

FIG. 4 is a diagram illustrating the usable power, chargeable power, and power generation amount of a generator of the electric construction machinery according to the temperature of the battery unit according to the second embodiment of the present disclosure.

Referring to FIGS. 3 and 4, when the temperature of the battery unit 20 is -20 to 10 degrees, the usable power of the battery unit 20 may be 0.5 C. When the temperature of the battery unit 20 is 10 to 25 degrees, the usable power of the battery unit 20 may be 3 C. When the temperature of the battery unit 20 is 25 to 55 degrees, the usable power of the battery unit 20 may be 1.5 C. In addition, when the temperature of the battery unit 20 is -20 to 0 degrees, the chargeable power of the battery unit 20 may be 0 C. When the temperature of the battery unit 20 is 0 to 25 degrees, the chargeable power of the battery unit 20 may be 0.3 C. When the temperature of the battery unit 20 is 25 to 45 degrees, the chargeable power of the battery unit 20 may be 0.7 C. When the temperature of the battery unit 20 is 45 to 60 degrees, the chargeable power of the battery unit 20 may linearly decrease to 0.7 C to 0 C.

The vehicle control unit 22 may detect the usable (or outputable) power (C-rate) according to the temperature of the battery unit 20, the chargeable power according to the state of charge (SOC) and temperature of the battery unit 20, and the required power of the motor 24 according to the load of the construction machinery. Additionally, the vehicle control unit 22 may control the total power required by the motor 24 to be less than or equal to the usable (or outputable) power depending on the temperature of the battery unit 20.

Specifically, the vehicle control unit 22 controls the power supplied to the first motor 24a, the second motor 24b, and the third motor 24c, so that the total power required by the first motor 24a, the second motor 24b, and the third motor 24c may be controlled to be less than or equal to the usable (or outputable) power depending on the temperature of the battery unit 20.

When there is no total power required by the motor 24, the engine 26 may drive the generator 25, and the battery unit 20 may be charged by receiving power produced by the generator 25. This series of processes may be performed by the vehicle control unit 22 (control signals from the vehicle control unit 22). In this connection, the vehicle control unit 22 may adjust the power generation amount of the generator 25 according to the charging limit (chargeable power) depending on the temperature of the battery unit 20.

Specifically, for example (*see* FIG. 4), when the temperature of the battery unit 20 (*see* FIG. 3 for reference numerals) is between 0 and 25 degrees, and there is no required power for the motor 24, the power generation amount of the generator 25 may be up to 35% of the total power of the generator 25, considering the chargeable power of the battery unit 20. In this connection, when there is required power for the motor 24, the power generation amount of the generator 25 may be 100% to 0% depending on the SOC of the battery unit 20. Specifically, when the SOC of the battery unit 20 is 30% or less, the power generation amount of the generator 25 may be up to 100%. When the SOC of the battery unit 20 is 30% to 80%, the power generation amount of the generator 25 may be up to 80%. When the SOC of the battery unit 20 is 80% or more, the generator 25 may not generate power (0%).

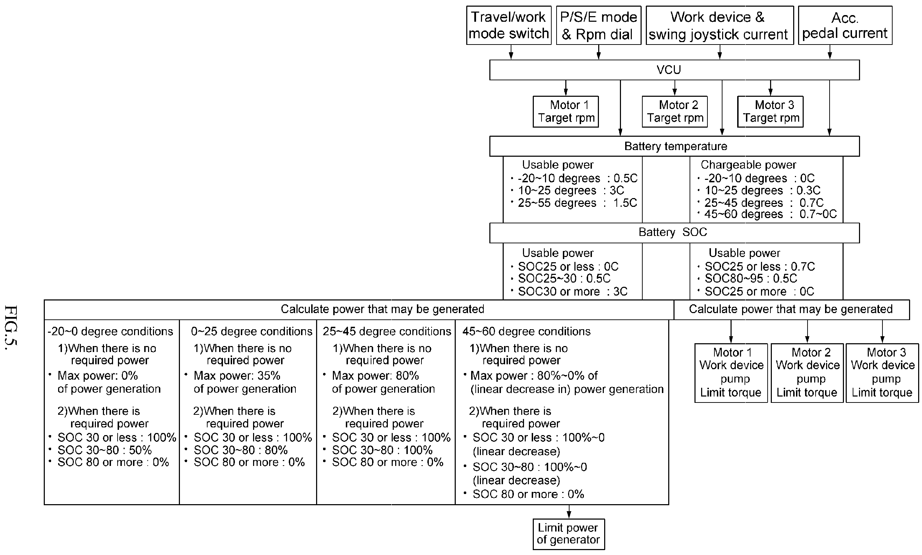

FIG. 5 is a diagram illustrating an example where the electric construction machinery in FIG. 4 is an excavator.

Referring to FIGS. 3 to 5, the vehicle control unit 22 may receive an electrical signal from the operation unit and transmit a control signal to the inverter unit 23 so that the construction machinery works according to the electrical signal received from the operation unit. In addition, the vehicle control unit 22 may control (adjust) the power supplied by the inverter unit 23 to the motor 24 using the control signal transmitted to the inverter unit 23. In other words, the power supplied to the first motor 24a, the second motor 24b, and the third motor 24c may be controlled (adjusted) by a control signal from the vehicle control unit 22.

The vehicle control unit 22 adjusts the power supplied to the first motor 24a, the second motor 24b, and the third motor 24c to adjust the number of revolutions per minute (rpm) of the first motor 24a, the second motor 24b, and the third motor 24c.

As shown in FIG. 5, usable power and chargeable power according to the SOC of the battery unit 20 *(see* FIG. 3 for reference numerals) may be determined as follows. When the SOC of the battery unit 20 is 25% or less, the usable power of the battery unit 20 may be 0 C. When the SOC of the battery unit 20 is 25% to 30% or less, the usable power of the battery unit 20 may be 0.5C. When the SOC of the battery unit 20 is 30% or more, the usable power of the battery unit 20 may be 3C. Additionally, when the SOC of the battery unit 20 is 25% or less, the chargeable power of the battery unit 20 may be 0.7C. When the SOC of the battery unit 20 is 80% to 95% or less, the chargeable power of the battery unit 20 may be 0.5C. When the SOC of the battery unit 20 is 95% or more, the chargeable power of the battery unit 20 may be 0 C.

The vehicle control unit 22 may adjust the power generation amount of the generator 25 according to the charging limit (chargeable power) depending on the temperature of the battery unit 20.

Specifically, for example (*see* FIG. 5), when the temperature of the battery unit 20 (*see* FIG. 3 for reference numerals) is between 0 and 25 degrees, and there is no required power for the motor 24, the power generation amount of the generator 25 may be up to 35% of the total power of the generator 25, considering the chargeable power of the battery unit 20. In this connection, when there is required power for the motor 24, the power generation amount of the generator 25 may be 100% to 0% depending on the SOC of the battery unit 20. Specifically, when the SOC of the battery unit 20 is 30% or less, the power generation amount of the generator 25 may be up to 100%. When the SOC of the battery unit 20 is 30% to 80%, the power generation amount of the generator 25 may be up to 80%. When the SOC of the battery unit 20 is 80% or more, the generator 25 may not generate power (0%). Even when the temperature of the battery unit 20 is under a different temperature condition, the vehicle control unit 22 may adjust the power generation amount of the generator 25 according to the charging limit (chargeable power) according to the temperature of the battery unit 20. The details thereof are described in FIG. 5.

To be described further with reference to FIGS. 3 and 5, in the case where the electric construction machinery is an excavator, when a traveling mode is selected, the vehicle control unit 22 may be controlled to transmit 100% of power to the third motor 24c, which is responsible for traveling, without working the first motor 24a (or a work device hydraulic pump).

Additionally, when a work mode is selected, the vehicle control unit 22 may be controlled to enable both work and traveling. In this connection, each of the motors 24 may be driven according to the set priority. In other words, the vehicle control unit 22 may be set to drive each of the motors 24 in priority order. Specifically, the vehicle control unit 22 may be prioritized to drive the first motor 24a, the second motor 24b, and the third motor 24c in that order. When all three motors 24 are used, the vehicle control unit 22 may limit the output of each of the motors 24 according to the temperature of the battery unit 20 according to the set priority. For example, the vehicle control unit 22 may control all of the first motor 24a, second motor 24b, and third motor 24c to use 100% of power when the temperature of the battery unit 20 is 10 to 25 degrees. In addition, the vehicle control unit 22 may control the first motor 24a and the second motor 24b to use 100% of power and the third motor 24c to use 80% of power when the temperature of the battery unit 20 is 25 to 25 degrees. In addition, the vehicle control unit 22 may control all of the first motor 24a, the second motor 24b, and the third motor 24c to use 50% of power when the temperature of the battery unit 20 is -20 to 10 degrees.

The motor 24 may be controlled based on speed control, and a limit torque may be set accordingly. The limit torque may be set as a percentage of the maximum torque (max. torque). Such settings are possible in the vehicle control unit 22.

Additionally, the vehicle control unit 22 may limit the amount of power generated by the generator 25 according to the output of each of the motors 24, the SOC of the battery unit 20, and the temperature of the battery unit 20.

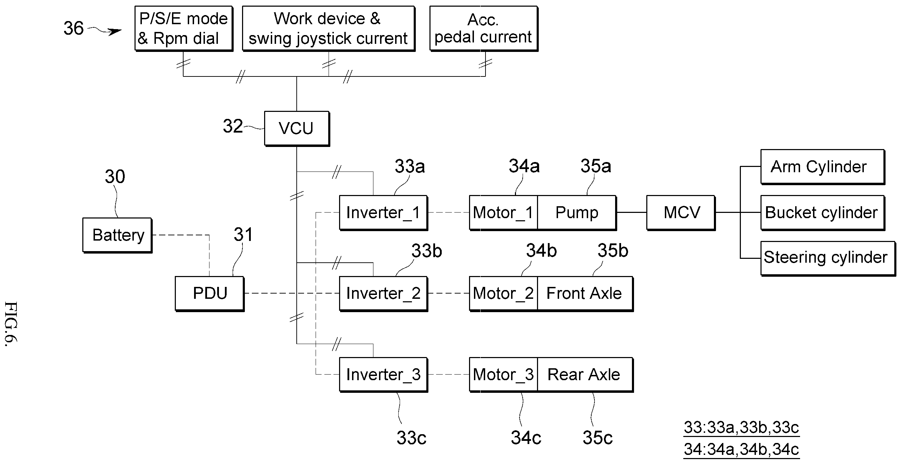

FIG. 6 is a diagram illustrating electric construction machinery according to a third embodiment of the present disclosure. Herein, the electric construction machinery is illustratively shown as a wheel loader.

Referring to FIG. 6, the electric construction machinery according to the third embodiment of the present disclosure includes a battery unit 30, a vehicle control unit (VCU) 32, a power distribution unit (PDU) 31, an inverter unit 33, and a motor 34.

Additionally, the electric construction machinery according to the third embodiment of the present disclosure may include a mode selection unit 36.

The mode selection unit 36 is installed in the driver's seat, so that the type of work performed by the construction machinery or the state mode to be applied to its operation when performing the selected work may be selected. The mode selection unit 36 installed in the driver's seat represents various types of operation buttons, operation levers, and operation switches. Specifically, the mode selection unit 36 installed in the driver's seat, as illustrated in FIG. 6, may represent power/standard/eco mode (P/S/E mode) and rpm dial, work device and swing joystick, and accelerator pedal (rpm for each traveling motor).

In explaining the components of the electric construction machinery according to the third embodiment of the present disclosure illustrated in FIG. 6, in comparison with the components of the electric construction machinery according to the first embodiment of the present disclosure illustrated in FIG. 1 above, specific descriptions of the same components are replaced with those described above. Hereinafter, the explanation will focus on the portions where there are differences.

Accordingly, the battery unit 30, the vehicle control unit 32, the power distribution unit 31, the inverter unit 33, and the motor 34 of the electric construction machinery according to the third embodiment of the present disclosure illustrated in FIG. 6 are the same as the battery unit 10, the vehicle control unit 12, the power distribution unit 11, the inverter unit 13, and the motor 14 of the electric construction machinery according to the first embodiment of the present disclosure illustrated in FIG. 1 above. Accordingly, the detailed descriptions of the same content will be replaced with the above descriptions. Hereinafter, the explanation will focus on the portions where there are differences.

The electric construction machinery according to the third embodiment of the present disclosure does not have an engine and performs construction work using the motor 34. The motor 34 is driven by receiving power stored in the battery unit 30.

When the construction machinery is a wheel loader, for example, the first motor 34a may be connected to a hydraulic pump 35a, the second motor 34b may be connected to the front axle 35b, the second motor 34b may be connected to a front axle 35b, and the motor 34c may be connected to a rear axle 35c. Herein, the front axle represents a mechanism that is mounted on the front left and right sides of the wheel loader and transmits the power transmitted through the connected drive and steering mechanism to tires, and the rear axle represents a mechanism that is mounted on the rear left and right sides of the wheel loader and transmits the power transmitted through the connected drive mechanism to the tires.

The hydraulic pump is connected to the MCV, which is connected to an arm cylinder, bucket cylinder, and steering cylinder.

The first motor 34a drives the hydraulic pump, and by driving the hydraulic pump, the working fluid may move to the arm cylinder, bucket cylinder, and steering cylinder through the MCV. The arm, bucket and steering are operated by the first motor 34a and the hydraulic pump.

The vehicle control unit 32 may control (adjust) the power supplied by the inverter unit 33 to the motor 34 using the control signal transmitted to the inverter unit 33.

Accordingly, the power supplied to the first motor 34a, the second motor 34b, and the third motor 34c may be controlled (adjusted) by the control signal from the vehicle control unit 32.

The vehicle control unit 32 controls the power supplied to the first motor 34a, the second motor 34b, and the third motor 34c, so that so that the power required by the first motor 34a, the second motor 34b, and the third motor 34c may be less than or equal to the usable power of the battery unit 30.

In addition, the outputable power of the battery unit 30 may vary depending on the temperature of the battery unit 30 depending on the type of battery cell, which is the basic unit of the battery unit 30. Hence, the vehicle control unit 32 controls the power supplied to the first motor 34a, the second motor 34b, and the third motor 34c, so that the power required by the first motor 34a, the second motor 34b, and the third motor 34c may be less than or equal to the usable (or outputable) power according to the temperature of the battery unit 30.

Referring again to FIG. 2, FIG. 2 shows the usable power and chargeable power of the electric construction machinery according to the first embodiment of the present disclosure according to the temperature of the battery unit, and may be applied in the same manner to the electric construction machinery according to the third embodiment of the present disclosure. In other words, the usable power and chargeable power according to the temperature of the battery unit may be applied in the same manner not only when the electric construction machinery is an excavator but also when the electric construction machinery is a wheel loader.

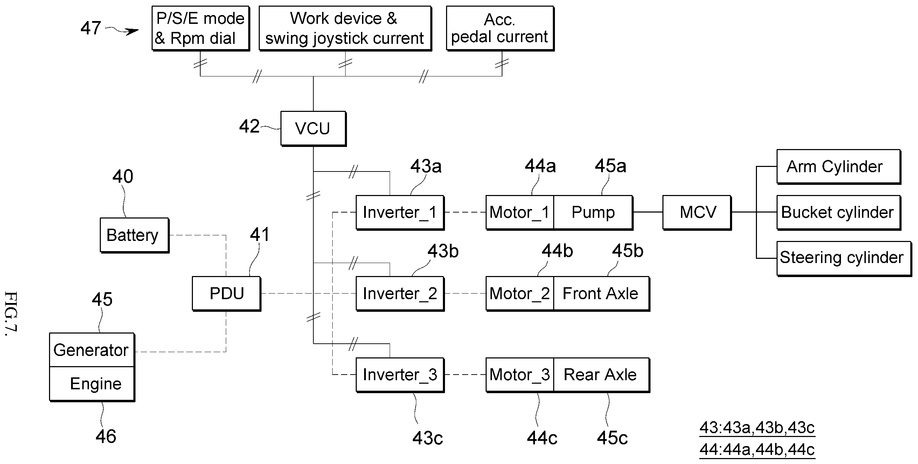

FIG. 7 is a diagram illustrating electric construction machinery according to a fourth embodiment of the present disclosure. Herein, the electric construction machinery is illustratively shown as a wheel loader.

Referring to FIG. 7, the electric construction machinery according to the fourth embodiment of the present disclosure includes a battery unit 40, a vehicle control unit 42, a power distribution unit 41, an inverter unit 43, a motor 44, a generator 45, and an engine 46.

Additionally, the electric construction machinery according to the fourth embodiment of the present disclosure may include a mode selection unit 47. This mode selection unit 47 may be the same as the mode selection unit 36 of the electric construction machinery according to the third embodiment of the present disclosure described above.

Additionally, the electric construction machinery according to the fourth embodiment of the present disclosure may include a hydraulic pump 45a, a front axle 45b, and a rear axle 45c. The hydraulic pump 45a, the front axle 45b, and the rear axle 45c may be the same as the hydraulic pump 35a, the front axle 35b, and the rear axle 35c of the electric construction machinery according to the third embodiment of the present disclosure described above. In comparison with the electric construction machinery according to the third embodiment of the present disclosure described above, the electric construction machinery according to the fourth embodiment of the present disclosure differs in that the generator 45 and the engine 46 are added. Accordingly, the battery unit 40, the vehicle control unit 42, the power distribution unit 41, the inverter unit 43, and the motor 44 of the electric construction machinery according to the fourth embodiment of the present disclosure are the same as the battery unit 30, the vehicle control unit 32, the power distribution unit 31, the inverter unit 33, and the motor 34 of the electric construction machinery according to the third embodiment of the present disclosure. Accordingly, the detailed descriptions of the same components will be replaced with the above descriptions.

In addition, the generator 45 and engine 46 of the electric construction machinery according to the fourth embodiment of the present disclosure are the same as the generator 25 and engine 26 of the electric construction machinery according to the second embodiment of the present disclosure described above. Accordingly, the detailed descriptions of the same components will be replaced with the above descriptions.

The generator 45 is electrically connected to the power distribution unit 41.

When the battery unit 40 is discharged, power produced by the generator 45 may be supplied to the battery unit 40 through the power distribution unit 41. Additionally, the power produced by the generator 45 may be supplied to the inverter unit 43 through the power distribution unit 41.

When discharging, the battery unit 40 may receive power from the generator 45 and convert electrical energy into chemical energy to store electricity.

The battery unit 40 may be electrically connected to the power distribution unit 41, and electricity stored in the battery unit 40 may be supplied to the inverter unit 43 through the power distribution unit 41 when necessary.

The power distribution unit 41 is disposed between the battery unit 40 and the inverter unit 43, and is electrically connected to the battery unit 40 and the inverter unit 43. Additionally, the power distribution unit 41 is electrically connected to the generator 45.

The power distribution unit 41 may distribute power supplied from the battery unit 40 or the generator 45 to an external circuit (specifically, the inverter unit 43). Additionally, the power distribution unit 41 may supply power supplied from the generator 45 to the battery unit 40.

Referring again to FIG. 4, FIG. 4 shows the usable power, chargeable power, and power generation amount of the generator according to the temperature of the battery unit of the electric construction machinery according to the second embodiment of the present disclosure, which may be applied in the same manner to the electric construction machinery according to the fourth embodiment of the present disclosure. In other words, the usable power, chargeable power, and power generation amount of the generator according to the temperature of the battery unit may be applied in the same manner not only when the electric construction machinery is an excavator but also when the electric construction machinery is a wheel loader.

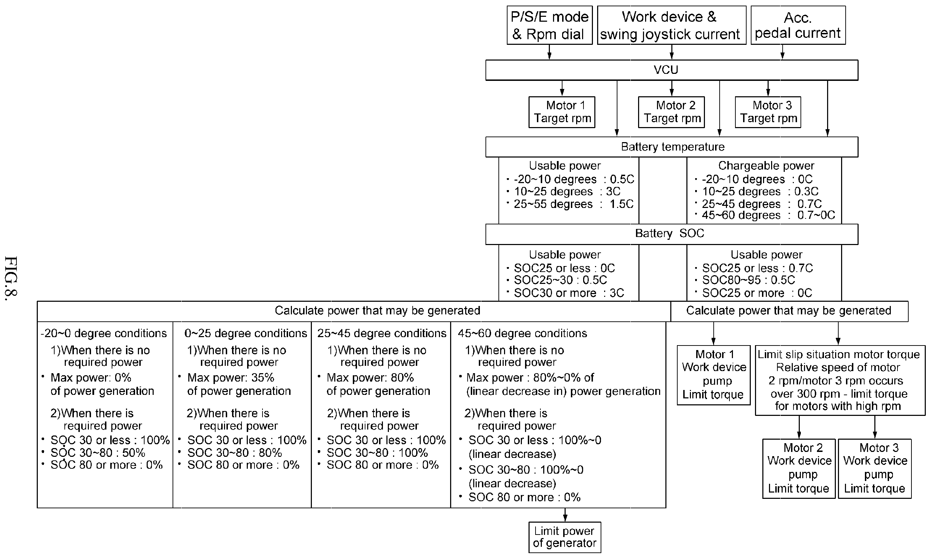

FIG. 8 is a diagram illustrating an example where the electric construction machinery in FIG. 4 is a wheel loader.

Referring to FIGS. 4, 7, and 8, the vehicle control unit 42 may receive an electrical signal from the operation unit and transmit a control signal to the inverter unit 43 so that the construction machinery works according to the electrical signal received from the operation unit. In addition, the vehicle control unit 42 may control (adjust) the power supplied by the inverter unit 43 to the motor 44 using the control signal transmitted to the inverter unit 43. In other words, the power supplied to the first motor 44a, the second motor 44b, and the third motor 44c may be controlled (adjusted) by a control signal from the vehicle control unit 42.

The vehicle control unit 42 adjusts the power supplied to the first motor 44a, the second motor 44b, and the third motor 44c to adjust the number of revolutions per minute (rpm) of the first motor 44a, the second motor 44b, and the third motor 44c.

As shown in FIG. 8, usable power and chargeable power according to the SOC of the battery unit 40 (*see* FIG. 7 for reference numerals) may be determined as follows. When the SOC of the battery unit 40 is 25% or less, the usable power of the battery unit 40 may be 0 C. When the SOC of the battery unit 40 is 25% to 30% or less, the usable power of the battery unit 40 may be 0.5C. When the SOC of the battery unit 40 is 30% or more, the usable power of the battery unit 40 may be 3C. Additionally, when the SOC of the battery unit 40 is 25% or less, the chargeable power of the battery unit 40 may be 0.7C. When the SOC of the battery unit 40 is 80% to 95% or less, the chargeable power of the battery unit 40 may be 0.5C. When the SOC of the battery unit 40 is 95% or more, the chargeable power of the battery unit 40 may be 0 C.

The vehicle control unit 42 may adjust the power generation amount of the generator according to the charging limit (chargeable power) depending on the temperature of the battery unit 40.

Specifically, for example (*see* FIG. 8), when the temperature of the battery unit 40 (see FIG. 7 for reference numerals) is between 0 and 25 degrees, and there is no required power for the motor 44, the power generation amount of the generator 45 may be up to 35% of the total power of the generator 45, considering the chargeable power of the battery unit 40. In this connection, when there is required power for the motor 44, the power generation amount of the generator 45 may be 100% to 0% depending on the SOC of the battery unit 40. Specifically, when the SOC of the battery unit 40 is 30% or less, the power generation amount of the generator 45 may be up to 100%. When the SOC of the battery unit 40 is 30% to 80%, the power generation amount of the generator 45 may be up to 80%. When the SOC of the battery unit 40 is 80% or more, the generator 45 may not generate power (0%). Even when the temperature of the battery unit 40 is under a different temperature condition, the vehicle control unit 42 may adjust the power generation amount of the generator 45 according to the charging limit (chargeable power) according to the temperature of the battery unit 40. The details thereof are described in FIG. 8.

To be described further with reference to FIGS. 7 and 8, in the case where the electric construction machinery is an wheel loader, when a work mode is selected, the vehicle control unit 42 may be controlled to enable both work and traveling. In this connection, each of the motors 44 may be driven according to the set priority. In other words, the vehicle control unit 42 may be set to drive each of the motors 44 in priority order. Specifically, the vehicle control unit 42 may be prioritized to drive the first motor 44a, the second motor 44b, and the third motor 44c in that order. When all three motors 44 are used, the vehicle control unit 42 may limit the output of each of the motors 44 according to the temperature of the battery unit 40 according to the set priority. For example, the vehicle control unit 42 may control all of the first motor 44a, second motor 44b, and third motor 44c to use 100% of power when the temperature of the battery unit 40 is 10 to 25 degrees. In addition, the vehicle control unit 42 may control the first motor 44a and the second motor 44b to use 100% of power and the third motor 44c to use 80% of power when the temperature of the battery unit 40 is 25 to 25 degrees. In addition, the vehicle control unit 42 may control all of the first motor 44a, the second motor 44b, and the third motor 44c to use 50% of power when the temperature of the battery unit 40 is -20 to 10 degrees.

The motor 44 may be controlled based on speed control, and a limit torque may be set accordingly. The limit torque may be set as a percentage of the maximum torque. Such settings are possible in the vehicle control unit 22.

In the case of the motor 44 responsible for traveling, the vehicle control unit 42 may also determine and calculate wheel slip according to the number of revolutions per minute (rpm) of the motor 44. For example, the vehicle control unit 42 may limit the torque of the motor 44 with a high revolutions per minute (rpm) when the relative speed between the revolutions per minute (rpm) of the second motor 44b and the revolutions per minute (rpm) of the third motor 44c exceeds 300 rpm.

Additionally, the vehicle control unit 42 may limit the amount of power generated by the generator 45 according to the output of each of the motors 44, the SOC of the battery unit 40, and the temperature of the battery unit 40.

The electric construction machinery according to embodiments of the present disclosure described above may limit the usable output of the motor so that the motor of the construction machinery may output according to the situation of construction work using limited power.

In addition, the electric construction machinery according to embodiments of the present disclosure may effectively control or distribute power to be distributed to each of the motors according to the temperature of the battery unit, the usable power of the battery unit, and/or chargeable power, etc.

The features, structures, and benefits and the like described in the embodiments are included in at least one embodiment of the present disclosure and are not necessarily limited to one embodiment. Furthermore, the features, structures, and benefits and the like provided in each embodiment may be combined or modified in other embodiments by those skilled in the art to which the embodiments belong. Accordingly, the contents related to the combination and modification should be construed to be included in the scope of the present disclosure.

In addition, although the embodiments of the present disclosure were described above, these are merely examples and do not limit the present disclosure. Further, the present disclosure may be changed and modified in various ways, without departing from the essential features of the present disclosure, by those skilled in the art. In other words, the components described in detail in the embodiments of the present disclosure may be modified. Further, differences due to the modification and application should be construed as being included in the scope and spirit of the present disclosure, which is described in the accompanying claims.

### [INDUSTRIAL APPLICABILITY]

The electric construction machinery according to an embodiment of the present disclosure may limit the usable output of the motor so that the motor of the construction machinery may output according to the situation of construction work using limited power.

### [DESCRIPTION OF REFERENCE NUMERALS]

10, 20, 30, 40: Battery unit
11, 21, 31, 41: Power distribution unit
12, 22, 32, 42: Vehicle control unit
13, 23, 33, 43: Inverter unit
14, 24, 34, 44: Motor
25, 45: Generator
26, 46: Engine

## Claims

1. Electric construction machinery, comprising:
a battery unit;
a power distribution unit electrically connected to the battery unit;
a plurality of inverter units electrically connected to the power distribution unit;
a plurality of motors electrically connected to the plurality of inverter units; and
a vehicle control unit that is electrically connected to each of the plurality of inverter units and transmits, to the inverter units, a control signal corresponding to an electrical signal received from an operation unit,
wherein the vehicle control unit detects usable power of the battery unit, and uses the control signal so as to control power supplied to the motors by the inverter units, and thus controls power required by the motors to be less than or equal to the usable power of the battery unit.

2. The electric construction machinery of claim 1, wherein the inverter unit comprises a motor control unit, and a control signal from the vehicle control unit is input to the motor control unit.

3. The electric construction machinery of claim 1, wherein the vehicle control unit controls the power supplied to the motors, and thus controls the power required by the motors to be less than or equal to the usable or outputable power according to a temperature of the battery unit.

4. The electric construction machinery of claim 1, further comprising:
a generator electrically connected to the power distribution unit; and
an engine that is connected to the generator and drives the generator,
wherein, when the battery unit is discharged, power produced by the generator is supplied to the battery unit through the power distribution unit, or the power produced by the generator is supplied to the inverter unit through the power distribution unit.

5. The electric construction machinery of claim 1, wherein the vehicle control unit detects the usable or outputable power according to a temperature of the battery unit, chargeable power according to a state of charge and temperature of the battery unit, and required power of the motor according to a load of the construction machinery, and controls the total power required by the motors to be less than or equal to the usable or outputable power according to the temperature of the battery unit.

6. The electric construction machinery of claim 4, wherein the vehicle control unit adjusts a power generation amount of the generator depending on a charging limit according to a temperature of the battery unit.

7. The electric construction machinery of claim 1, further comprising a mode selection unit that changes settings of the construction machinery, wherein the inverter unit controls the power supplied to the motor according to selection of the mode selection unit.

8. The electric construction machinery of claim 7, wherein the vehicle control unit limits or delimits an output of the motor according to a temperature of the battery unit.

9. The electric construction machinery of claim 1, wherein:
the plurality of inverter units comprises a first inverter unit, a second inverter unit, and a third inverter unit;
the plurality of motors comprises a first motor electrically connected to the first inverter unit, a second motor electrically connected to the second inverter unit, and a third motor electrically connected to the third inverter unit; and
the first motor is connected to a hydraulic pump, the second motor is connected to a swing reduction gear, and the third motor is connected to a traveling device.

10. The electric construction machinery of claim 9, wherein:
when a work mode is selected, the vehicle control unit sets priorities to drive the first motor, the second motor, and the third motor in that order; and
the vehicle control unit limits an output of the first motor, the second motor, and the third motor according to a temperature of the battery unit depending on the set priorities when the first motor, the second motor, and the third motor are all used.

11. The electric construction machinery of claim 10, wherein the vehicle control unit controls all of the first motor, second motor, and third motor to use 100% of power when the temperature of the battery unit is 10 to 25 degrees, controls the first motor and the second motor to use 100% of power and the third motor to use 80% of power when the temperature of the battery unit is 25 to 25 degrees, and controls all of the first motor, the second motor, and the third motor to use 50% of power when the temperature of the battery unit is -20 to 10 degrees.
